(19) **Europäisches Patentamt**

**European Patent Office**

**Office européen des brevets**

(11) **EP 1 071 880 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(51) Int Cl.⁷: **F02P 3/055**, F02P 5/155, F02P 11/06

(21) Anmeldenummer: **99960815.1**

(22) Anmeldetag: **26.10.1999**

(86) Internationale Anmeldenummer:
**PCT/DE1999/003410**

(87) Internationale Veröffentlichungsnummer:
**WO 2000/049290 (24.08.2000 Gazette 2000/34)**

(54) **ZÜNDSTEUERVORRICHTUNG UND -VERFAHREN**

IGNITION CONTROL DEVICE AND METHOD

DISPOSITIF ET PROCEDE DE COMMANDE D'ALLUMAGE

(84) Benannte Vertragsstaaten:
**DE FR IT**

(30) Priorität: **16.02.1999 DE 19906390**

(43) Veröffentlichungstag der Anmeldung:
**31.01.2001 Patentblatt 2001/05**

(73) Patentinhaber: **ROBERT BOSCH GMBH**
**70442 Stuttgart (DE)**

(72) Erfinder:
• **DENZ, Helmut**
**D-70184 Stuttgart (DE)**

• **HAUSSMANN, Martin**
**D-74343 Sachsenheim (DE)**

(56) Entgegenhaltungen:
**DE-A- 4 125 677          US-A- 5 269 274**
**US-A- 5 816 218**

• **PATENT ABSTRACTS OF JAPAN vol. 012, no. 067 (M-673), 2. März 1988 (1988-03-02) & JP 62 214270 A (NISSAN MOTOR CO LTD), 21. September 1987 (1987-09-21)**
• **PATENT ABSTRACTS OF JAPAN vol. 004, no. 020 (M-092), 19. Februar 1980 (1980-02-19) & JP 54 158531 A (NIPPON DENSO CO LTD), 14. Dezember 1979 (1979-12-14)**

# Beschreibung

STAND DER TECHNIK

Die vorliegende Erfindung betrifft eine Zündsteuervorrichtung sowie ein entsprechendes Zündsteuerverfahren.

Obwohl auf beliebige Zündsteuerungen anwendbar, werden die vorliegende Erfindung sowie die ihr zugrundeliegende Problematik in bezug auf ein an Bord eines Kraftfahrzeuges befindliches Motorsteuergerät erläutert.

Zündsteuervorrichtungen zum Steuern von Zündereignissen für Zündspulenzündsysteme bzw. -einrichtungen besitzen im wesentlichen zwei Steuerfunktionen, die Steuerung einer gewünschten Zündenergie über die Einschaltdauer bzw. Ladedauer der Zündspule sowie das winkelrichtige Steuern eines Zündimpulses über den Abschaltzeitpunkt bzw. das Ladeende der Zündspule.

Die Zündenergie, die bei Spulenzündanlagen über eine Ladezeit der Zündspule zugemessen wird, ist entsprechend der am elektrischen Schaltkreis der Spule anliegenden Bordnetzspannung sowie der Zeitkonstante des elektrischen Schaltkreises unterschiedlich lang.

Üblicherweise sind die jeweiligen Sollwerte in Abhängigkeit von der Drehzahl und möglichen weiteren Motorparametern als Kennlinienfeld im Steuergerät abgelegt.

Die Sollwerte "Ladezeit" und "Zündwinkel" ergeben beim Auftreten einer Drehzahldynamik einen Zielkonflikt. Die Winkellage des Beginns der Ladephase, also der Schließbeginnwinkel, muß derart gewählt werden, daß nach dem Ende der Ladezeit der Zündwinkel erreicht wird. Das heißt zum Zietpunkt der Berechnung des Zündereignisses muß der Zeit-Winkel-Verlauf der Kurbelwellenbewegung bereits bekannt sein.

Bei extremer Drehzahldynamik und niederfrequenter Drehzahlabtastung, insbesondere beim Start des Motors, entsteht in üblichen Zündsteuervorrichtungen ein nicht nachverlässigbarer Schätzfehler dieses Zeit-Winkel-Verlaufs.

Übliche Steuergeräte verfügen zur Ausgabe von Winkelsignalen über einen Winkelgeberrad, das winkelmäßig äquidistante Impulse an die Zündsteuervorrichtung liefert. Aus Gründen der Rechenlaufzeit kann die Berechnung der Zündereignisse aber in den meisten Zündsteuervorrichtungsarchitekturen nur segmentweise erfolgen, wobei ein Segment das Winkelintervall von 720° der Kurbelwelle geteilt durch die Zylinderzahl ist, also bei einem Vierzylindermotor beispielsweise 180°. Daher können die in der Berechnung ermittelten Winkellagen der Zündereignisse zwar über das Winkelgeberrad und die bei den Zündsteuervorrichtungen üblichen Timer/Counter(Zeitgeber/Zähler)-Schaltungen hinreichend genau ausgemessen werden, die Berechnung selbst geht aber von einer erfaßten Drehzahl aus, die bei der Drehzahldynamik am Ort der Zündung nicht mehr vorhanden ist.

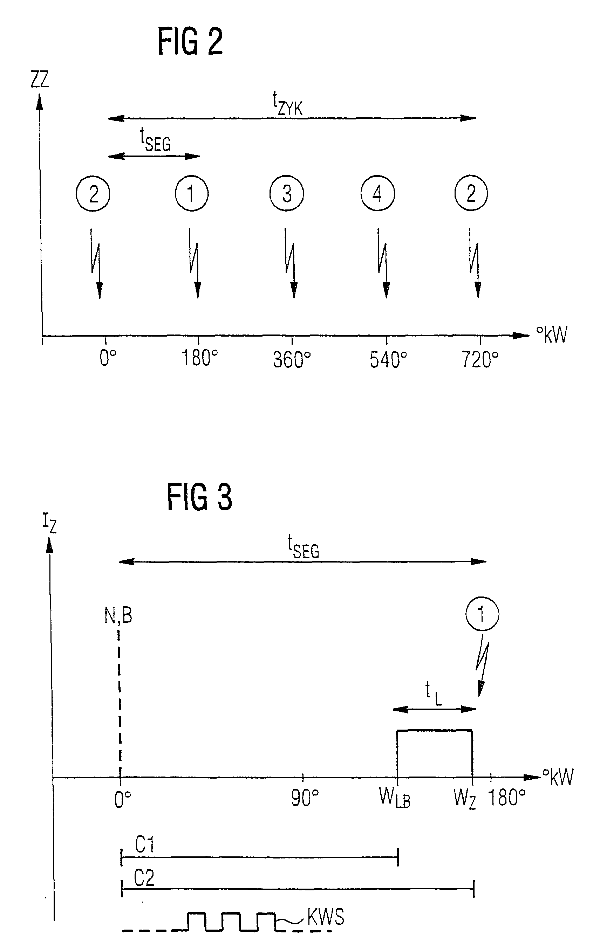

Zur Erläuterung der Problematik zeigt Fig. 2 eine schematische Darstellung der Zündfolge bei einer Vierzylinder-Brennkraftmaschine.

In Fig. 2 ist auf der x-Achse der Kurbelwinkel KW in ° aufgetragen und auf der y-Achse der Zündverlauf ZZ, welcher die Reihenfolge ...-2-1-3-4-2-... aufweist. Ein vollständiger Zyklus beträgt 720° KW entsprechend einer Zykluszeit $t_{ZYK}$. Ein Segment beträgt 720°KW/4 = 180° entsprechend einer Segmentzeit $t_{SEG}$.

Fig. 3 zeigt eine schematische Darstellung der Zündsteuerungs-Funktionsabläufe im Segment des ersten Zylinders der Vierzylinder-Brennkraftmaschine hinsichtlich der Ansteuerung des Zündspulenstroms $I_Z$.

Bei 0° wird die Drehzahl N erfaßt und unmittelbar danach werden die Ladezeit $t_L$ sowie der Zündwinkel $w_Z$ (näherungsweise gleich dem Schließendwinkel) aus einem Kennlinienfeld B entnommen.

Danach wird der Schließ- bzw. Ladebeginnwinkel $w_{LB}$ aus der Beziehung

$$w_{LB} = w_Z - t_L \cdot \omega$$

unter Annahme einer gleichförmigen Bewegung ermittelt, wobei $\omega$ die der Drehzahl N entsprechende Winkelgeschwindigkeit ist. Aus Gründen der Rechenlaufzeit wird diese zeitliche und winkelmäßige Lage der Zündereignisse nur einmal pro Zündabstand berechnet.

Im Falle des Ladezeitausgabe-Modus wird mit einem Zähler C1 ausgehend von 0° der Winkel $w_{LB}$ über das Kurbelwellensensorsignal KWS erfaßt und bei Erreichen des Winkels $w_{LB}$ die Endstufe der Zündspule angesteuert. Dann wird die Ladezeitdauer $t_L$ mit einem Zeitgeber gesteuert und nach Verstreichen der Ladezeitdauer $t_L$ die Ansteuerung unterbrochen.

Im Falle des Zündwinkelausgabe-Modus wird mit einem Zähler C1 ausgehend von 0° der Winkel $w_{LB}$ über das Kurbelwellensensorsignal KWS erfaßt und bei Erreichen des Winkels $w_{LB}$ die Endstufe der Zündspule angesteuert. Mit einem weiteren Zähler C2 wird ausgehend von 0° der Winkel $w_Z$ über das Kurbelwellensensorsignal KWS erfaßt und bei Erreichen des Winkels $w_Z$ die Ansteuerung unterbrochen.

Da die Fehlberechnung des Drehzahlverlaufs z.B. im Falle des Starts des Motors nicht vernachlässigbar ist, wird bei Zündsteuervorrichtungen üblicherweise eine Priorisierung der Steuerziele Ladezeit und Zündwinkel vorgenommen. Entschließt man sich zur exakten Ausgabe der Ladezeit - sog. Ladezeitausgabe-Modus -über die Timer/Counter-Schaltung, so ergibt sich bei der Startbeschleunigung (Drehzahlerhöhung) ein Spätversatz des Zündwinkels. Wird hingegen der Zündwinkel exakt ausgegeben - sog. Zündwinkelausgabe-Modus -, so verkleinert sich bei der Startdynamik die Ladezeit und damit die Energie in der Zündspule, weshalb es zu Aussetzern kommen kann.

Üblicherweise wird daher die Ausgabemethode, d.h. Ladezeitausgabe oder Zündwinkelausgabe, abhängig von den Eigenschaften des Zielsystems fest vorgegeben, oder aber es findet eine Umschaltung der Ausgabemethode bei einer Grenzdrehzahl statt. Üblich hierbei ist eine Ladezeitausgabe während des Starts und ein Umschalten auf Zündwinkelausgabe ab einer Grenzdrehzahl, bei der die Drehzahlabtastung derart hochfrequent ist, daß der Dynamikfehler vernachlässigbar wird, ab der andererseits aber auch die Empfindlichkeit des Drehmoments über dem Zündwinkel stark abnimmt.

Eine automatische Wahl des Ausgabeverfahrens über eine allgemein gültige Rechenvorschrift, die die Ausgabemethode selbständig während der Rechenzeit aus den aktuellen physikalischen Gegebenheiten ermittelt, ist daher wünschenswert.

VORTEILE DER ERFINDUNG

Die erfindungsgemäße Zündsteuervorrichtung mit den Merkmalen des Anspruchs 1 und das entsprechende Zündsteuerverfahren gemäß Anspruch 5 weisen gegenüber den bekannten Lösungsansätzen den Vorteil auf, daß eine Auswahl der zu den aktuellen physikalischen Gegebenheiten der Zündsteuervorrichtung passenden Zündmethode durchgeführt wird. Mit anderen Worten wird eine zweckmäßige modellmäßige Darstellung der physikalischer Zusammenhänge, die für die Spulenzündung von wesentlicher Bedeutung sind, intern in der Zündsteuervorrichtung vorgesehen. Dadurch kann ohne aufwendige Applikation der für die Zündsteuervorrichtung sowie für den zuständigen Motor günstigste Arbeitsmodus ausgewählt werden.

Dies ist insbesondere bei Zündsteuervorrichtungen notwendig, die keine eindeutige Priorisierung der Ausgabenmethoden Ladezeitausgabe und Zündwinkelausgabe zulassen. Der Einsatz von Zündeinheiten, d.h. Spule und Zünder, mit moderaten Ladezeiten und Montage auf dem unter Umständen heißen Zylinderkopf bringen hier weitere Freiheitsgrade mit sich. Ferner erleichtert die Erfindung die Applikation der Zündsteuervorrichtung, da die Moduswahl automatisch aus den aktuellen physikalischen Gegebenheiten ermittelt wird. Eine Anpassung an die Erfordernisse verschiedener Einsatzgebiete ist damit wesentlich einfacher.

Die der vorliegenden Erfindung zugrundeliegende Idee besteht darin, daß ein Schätzen eines Fehlers des Zündwinkels im Ladezeitausgabe-Modus und/oder eines Fehlers des Ladezeit im Zündwinkelausgabe-Modus aufgrund einer möglichen Drehzahländerung nach dem Erfassungszeitpunkt durchgeführt wird. Basierend auf dem geschätzten Fehler, z.B. wenn dieser einen Schwellwert überschreitet, findet eine Bestimmung eines Zündsteuermodus von den Modi Zündwinkelausgabe und Ladezeitausgabe für den Zündsegment statt.

Vorzugsweise wird der Zündwinkelfehler im Modus Zeitausgabe geschätzt und anhand dieser Schätzung entschieden, ob der Modus Zündwinkelausgabe oder Ladezeitausgabe gewählt wird. Mit anderen Worten entscheidet die Zündsteuervorrichtung selbständig, ob der vermutliche Ausgabefehler noch tolerierbar ist.

In den Unteransprüchen finden sich vorteilhafte Weiterbildungen und Verbesserungen der in Anspruch 1 angegebenen Zündsteuervorrichtung bzw. des in Anspruch 5 angegebenen Zündsteuerverfahrens.

Gemäß einer bevorzugten Weiterbildung ist die Fehlerschätzungseinrichtung derart gestaltet ist, daß sie einen Versatz des Zündwinkels im Ladezeitausgabe-Modus schätzt und die Zündsteuermodus-Bestimmungseinrichtung den Zündwinkelausgabe-Modus bestimmt, wenn der geschätzte Versatz einen vorbestimmten Grenzwert überschreitet.

Gemäß einer weiteren bevorzugten Weiterbildung weist die Fehlerschätzungseinrichtung eine Drehzahlerfassungsfehler-Schätzungseinrichtung zum Schätzen des Drehzahlerfassungsfehlers unter Berücksichtigung der Drehzahl und/oder der zeitlichen Änderung der Drehzahl; eine Gewichtungseinrichtung zum Gewichten des geschätzten Drehzahlerfassungsfehlers mit der bestimmten Ladezeit; und eine Korrektureinrichtung zum Ermitteln einer Korrektur entsprechend einer möglichen Drehzahländerung zwischen dem Erfassungszeitpunkt und dem dem Ladebeginnwinkel entsprechenden Ladebeginnzeitpunkt auf.

Gemäß einer weiteren bevorzugten Weiterbildung weist die Fehlerschätzungseinrichtung eine Temperaturerfassungseinrichtung zum Erfassen der Motortemperatur und eine Kennlinien-Einrichtung zum Angeben eines Schätzwertes für den Versatz anhand der erfaßten Motortemperatur auf.

ZEICHNUNGEN

Ausführungsbeispiele der Erfindung sind in den Zeichnungen dargestellt und in der nachfolgenden Beschreibung näher erläutert.

Es zeigen:

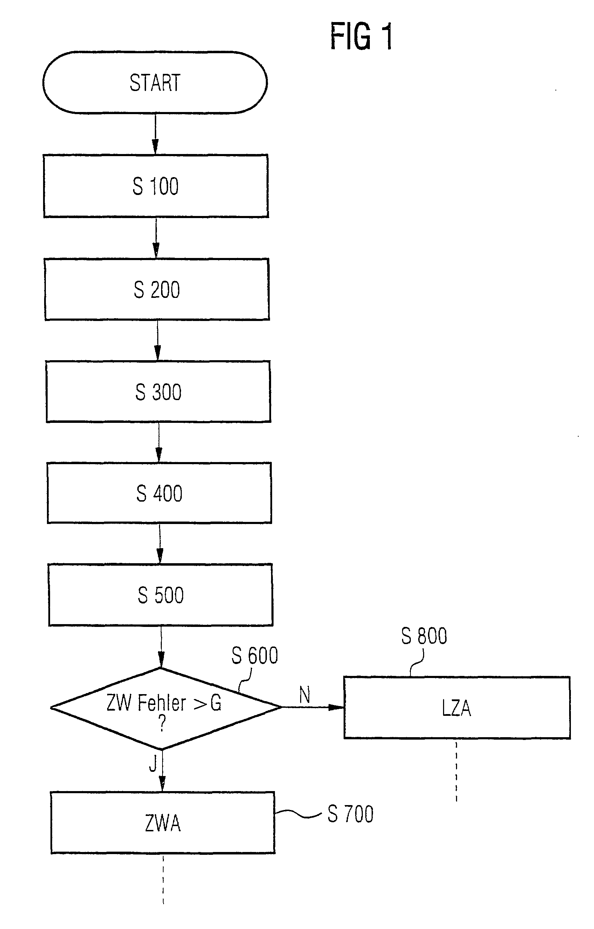

Fig. 1    ein Fließdiagramm zum Erläutern eines Ausführungsbeispiels der vorliegenden Erfindung;

Fig. 2    eine schematische Darstellung der Zündfolge bei einer Vierzylinder-Brennkraftmaschine; und

Fig. 3    eine schematische Darstellung der Zündsteuerungs-Funktionsabläufe im Segment des ersten Zylinders der Vierzylinder-Brennkraftmaschine.

BESCHREIBUNG DER AUSFÜHRUNGSBEISPIELE

In den Figuren bezeichnen gleiche Bezugszeichen gleiche oder funktionsgleiche Elemente.

Fig. 1 zeigt ein Fließdiagramm zum Erläutern eines Ausführungsbeispiels der vorliegenden Erfindung. Bei diesem Ausführungsbeispiel wird wird folgende Vorgehensweise vorgeschlagen.

Zunächst erfolgt bei Schritt 100 eine Messung bzw. Erfassung der Drehzahl N analog zu der in Fig. 3 gezeigten Weise am Beginn des Segments des betreffenden Zylinders. Die für die in der Zündausgabe notwendigen Schätzungen des Zeit-Winkel-Verlaufs benötigten Drehzahlinformationen, liegen dabei üblicherweise als Zeitangabe über einem Winkelintervall vor.

Die Meßgüte des gemessenen Zeit-Winkel-Verlaufs wird in Schritt S200 über Schwellwertvergleiche der Drehzahl N und der ersten zeitlichen Ableitung des Drehzahlverlaufs dN/dt zum Meßzeitpunkt geschätzt. Je geringer die Basisdrehzahl und je größer die Beschleunigung ist, die ab dieser Drehzahl wirkt, desto ungenauer ist die Zeit-Winkel-Messung der Zündsteuervorrichtung. Der Schwellwertevergleich liefert eine Schätzung für den absoluten Drehzahlmeßfehler. Der Schwellwert, die Drehzahl und Drehzahlableitung bzw. -änderung bewerten die Meßgüte und damit die Steuergüte.

Der geschätzte absolute Drehzahlmeßfehler wird mit der Soll-Ladezeit $t_L$ gewichtet. Dadurch wird der Anteil des Winkelfehlers, der durch die Drehzahlfehlmessung entsteht, in Schritt S300 geschätzt.

Aus dem Winkelabstand zwischen Segmentbeginn und Zündwinkel $w_Z$ wird in Schritt S400 ein Korrekturwert berechnet, der dem Dynamikfehler entspricht, der durch den Drehzahlanstieg vom Segmentbeginn bis zum Ladebeginn $w_{LB}$ entsteht.

Der mit der Schließzeit bzw. Soll-Ladezeit $t_L$ gewichtete Drehzahlmeßfehler, d.h. der Winkelfehler und der Korrekturwert werden in Schritt S500 addiert. Dadurch erhält man eine Schätzung für den maximalen Spätversatz im Modus Ladezeitausgabe.

Nachstehend wird ein konkretes Beispiel für die numerische Abschätzung des Zündwinkelfehlers im Ladezeitausgabe-Modus angeführt. Für die Bewegungsform zwischen zwei Segmenten wird dabei in guter Nährung eine konstante Beschleunigung angenommen.

Die Abweichung des Zündwinkels bei Ladezeitausgabe ergibt sich somit wie folgt:

$$zwout_{real} = zwout + szout \cdot (nmot_{ist} - nmot_{sg}) +$$
$$a \cdot t_{Ladebeginn} \cdot szout + 1/2 \cdot szout^2$$

wobei $zwout_{real}$ der tatsächlich ausgegebene Zündwinkel bei konstanter Beschleunigung ist (der Winkel bezieht sich auf die Lage der Ereignisberechnung),

zwout der Soll-Zündwinkel bezogen auf die Lage der Ereignisberechnung ist,

szout die Ladezeit ist,

$nmot_{ist}$ die tatsächliche Drehzahl bei der Zündereignisrechnung ist,

$nmot_{sg}$ die Drehzahlinformation des Steuergerätes ist (durch die Mittelung über ein Meßwinkelintervall ist die Meßdrehzahl kleiner als die tatsächliche Drehzahl), dabei kann $f(nmot_{sg}, dn)$ beispielsweise als Kennfeld gegeben sein, wobei dn die Drehzahländerung seit der letzten Messung ist,

a die Beschleunigung ist ($f(dn)$),

$t_{Ladebeginn}$ die Zeit von der Ereignisberechnung zum Beginn der Ladephase ist ($f(swout,zwout) \cdot tseg$),

swout der vermutliche Schließwinkel ist, d.h. swout = szout/tseg $\cdot$ Segmentwinkel, und

tseg die Segmentzeit ist, d.h. die Zeit für das Winkelintervall 720° Kurbelwelle geteilt durch die Zylinderzahl.

Der geschätzte Ausgabefehler der Zündwinkelausgabe ergibt sich somit gemäß

$$zwfehler = zwout_{real} - zwout$$

Überschreitet der maximale Spätversatz im Modus Ladezeitausgabe einen vorbestimmten Grenzwert so wird auf den Modus Zündwinkelausgabe ZWA bei S700 geschaltet ansonsten in den Modus Ladezeitausgabe LZA bei S800. Diese Entscheidung S600 sollte vor der zweiten Zündung nach dem Start durchgeführt werden, da dort der Dynamikfehler am größten ist.

Im weiteren Verlauf kann der Zündwinkelausgabe-Modus ZWA beibehalten werden oder aber bei Unterschreiten des Grenzwertes wieder auf den Ladezeitausgabe-Modus LZA umgestellt werden. Auch können weitere Kriterien, z.B. Erreichen einer bestimmten Drehzahl usw., für die Modusentscheidung eingebaut werden.

Beim Ladezeitausgabe-Modus wird, wie oben mit Bezug auf Fig. 3 erläutert, nach dem Erreichen des Ladebeginnwinkels die Ladezeit abgewartet und bei exakten Einhalten der Soll-Energie in der Spule gezündet. Dadurch wird ausreichend Energie bei minimaler Verlustleistung garantiert. Der Zündwinkel wird bei niedrigeren Drehzahlen und großer Beschleunigung abhängig von der Schließzeit und abhängig von der Lage des Soll-Zündwinkels nach spät verschoben. In der Applikation des Zündwinkels wird daher bei Drehzahl in der Größenordnung der Starterdrehzahl zweckmäßigerweise ein Dynamikvorhalt in Richtung früh addiert.

Beim Zündwinkelausgabe-Modus wird, wie oben mit Bezug auf Fig. 3 erläutert, der Zündwinkel unabhängig vom Ladebeginnwinkel ausgemessen. Bei einer auftretenden Beschleunigung wird vor Ablauf der Ladezeit gezündet. In der Applikation wird hier zweckmäßigerweise bei großer Beschleunigung und kleiner Drehzahl ein Dynamikvorhalt auf die Ladezeit in Richtung früh appliziert.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Optionellerweise kann der maximale Spätversatz im Ladezeitausgabe-Modus auch über eine Kennlinie über die Motortemperatur geschätzt werden, da bei einer Zündapplikation im Start die Zündwinkel während des Hochlaufs nährungsweise konstant bleiben und je nach Temperatur die Beschleunigung des Motors immer in etwa gleich verläuft. Diese Kennlinie hat die Form zwfehler = f(tmot).

Der mögliche maximale Zündwinkelfehler sollte dann Offline für gegebene Soll-Zündwinkel, Soll-Schließzeiten und mit der bei der Temperatur gemessenen Beschleunigung plus einer möglichen Streuung gerechnet werden. Hierzu muß das Hochlaufverhalten des Motors über der Drehzahl dauerhaft auch über die Alterung reproduzierbar sein.

**Patentansprüche**

1. Zündsteuervorrichtung zum Steuern einer Zündspuleneinrichtung für eine Brennkraftmaschine mit:

   einer Drehzahlerfassungseinrichtung zum Erfassen der Drehzahl der Brennkraftmaschine zu einem Erfassungszeitpunkt innerhalb des Zündzyklus eines jeweiligen Zylinders;

   einer Winkelerfassungseinrichtung zum Erfassen des aktuellen Kurbelwinkels der Brennkraftmaschine;

   einer Bestimmungseinrichtung zum Bestimmen eines der erfaßten Drehzahl entsprechenden vorgegebenen Zündwinkels, einer der erfaßten Batteriespannung entsprechenden vorgegebenen Ladezeit und eines entsprechenden Ladebeginnwinkels;

   einer Zündsteuerwert-Ausgabeeinrichtung zum Ausgeben der Ladezeit der Zündspuleneinrichtung beginnend ab dem Ladebeginnwinkel durch Anhängen der Ladezeit in einem Ladezeitausgabe-Modus und durch Auszählen eines Ladewinkels bis zum Zündereignis in einem Zündwinkelausgabe-Modus;

   einer Fehlerschätzungseinrichtung zum Schätzen eines Fehlers des Zündwinkels im Ladezeitausgabe-Modus und/oder eines Fehlers der Ladezeit im Zündwinkelausgabe-Modus aufgrund einer möglichen Drehzahländerung nach dem Erfassungszeitpunkt; und

   einer Zündsteuermodus-Bestimmungseinrichtung zum Bestimmen eines Zündsteuermodus von den Modi Zündwinkelausgabe und Ladezeitausgabe für den Zündsegment basierend auf dem geschätzten Fehler.

2. Zündsteuervorrichtung nach Anspruch 1, **dadurch gekennzeichnet, daß** die Fehlerschätzungseinrichtung derart gestaltet ist, daß sie einen Versatz des Zündwinkels im Ladezeitausgabe-Modus schätzt und die Zündsteuermodus-Bestimmungseinrichtung den Zündwinkelausgabe-Modus bestimmt, wenn der geschätzte Versatz einen vorbestimmten Grenzwert überschreitet.

3. Zündsteuervorrichtung nach einem der Ansprüche 1 oder 2, **dadurch gekennzeichnet, daß** die Fehlerschätzungseinrichtung aufweist:

   eine Drehzahlerfassungsfehler-Schätzungseinrichtung zum Schätzen des Drehzahlerfassungsfehlers unter Berücksichtigung der Drehzahl und/oder der zeitlichen Änderung der Drehzahl;

   eine Gewichtungseinrichtung zum Gewichten des geschätzten Drehzahlerfassungsfehlers mit der bestimmten Ladezeit; und

   eine Korrektureinrichtung zum Ermitteln einer Korrektur entsprechend einer möglichen Drehzahländerung zwischen dem Erfassungszeitpunkt und dem dem Ladebeginnwinkel entsprechenden Ladebeginnzeitpunkt.

4. Zündsteuervorrichtung nach einem der Ansprüche 1 oder 2, **dadurch gekennzeichnet, daß** die Fehlerschätzungseinrichtung aufweist:

   eine Temperaturerfassungseinrichtung zum Erfassen der Motortemperatur; und

   eine Kennlinien-Einrichtung zum Angeben eines Schätzwertes für den Versatz anhand der erfaßten Motortemperatur.

5. Zündsteuerverfahren zum Steuern einer Zündspuleneinrichtung für eine Brennkraftmaschine mit den Schritten:

   Erfassen der Drehzahl der Brennkraftmaschine zu einem Erfassungszeitpunkt innerhalb des Zündsegment eines jeweiligen Zylinders;

Bestimmen eines der erfaßten Drehzahl entsprechenden vorgegebenen Zündwinkels, einer der erfaßten Drehzahl entsprechenden vorgegebenen Ladezeit und eines entsprechenden Ladebeginnwinkels;

Ausgeben des Ladebeginnwinkels und der Ladezeit in einem Ladezeitausgabe-Modus und des Ladebeginnwinkels und des Zündwinkels in einem Zündwinkelausgabe-Modus an die Zündspuleneinrichtung;

Schätzen eines Fehlers des Zündwinkels im Ladezeitausgabe-Modus und/oder eines Fehlers des Ladezeit im Zündwinkelausgabe-Modus aufgrund einer möglichen Drehzahländerung nach dem Erfassungszeitpunkt; und

Bestimmen eines Zündsteuermodus von den Modi Zündwinkelausgabe und Ladezeitausgabe für den Zündsegment basierend auf dem geschätzten Fehler.

6. Verfahren nach Anspruch 5, **dadurch gekennzeichnet, daß** der Fehler über eine gemittelte Drehzahländerung geschätzt wird, welche vorzugsweise mit der Schließzeit gewichtet wird.

7. Verfahren nach Anspruch 5 oder 6, **dadurch gekennzeichnet, daß** die Ladebeginnzeit aus der aktuellen Winkelgeschwindigkeit geschätzt wird.

8. Verfahren nach Anspruch 5, 6 oder 7, **dadurch gekennzeichnet, daß** eine bestimmte zeitliche Entwicklung der Drehzahl zum Schätzen angenommen wird, vorzugsweise eine konstante Beschleunigung.

**Claims**

1. Ignition control device for controlling an ignition coil device for an internal combustion engine having:

   a rotational speed sensing device for sensing the rotational speed of the internal combustion engine at a sensing time within the ignition cycle of a respective cylinder;
   an angle sensing device for sensing the current crank angle of the internal combustion engine;
   a determining device for determining a predefined ignition angle corresponding to the sensed rotational speed, a predefined charging time corresponding to the sensed battery voltage, and a corresponding start-of-charging angle;
an ignition control value output device for output of the charging time of the ignition coil device starting from the start-of-charging angle by appending the charging time in a charging time output mode and by counting a charging angle up to the ignition event in an ignition angle output mode;
a fault estimating device for estimating a fault in the ignition angle in the charging time output mode and/or a fault in the charging time in the ignition angle output mode on the basis of a possible change in the rotational speed after the sensing time; and
an ignition control mode determining device for determining an ignition control mode from the ignition angle output and charging time output modes for the ignition segment on the basis of the estimated fault.

2. Ignition control device according to Claim 1, **characterized in that** the fault estimating device is designed in such a way that it estimates an offset of the ignition angle in the charging time output mode and the ignition control mode determining device determines the ignition angle output mode if the estimated offset exceeds a predetermined limiting value.

3. Ignition control device according to one of Claims 1 or 2, **characterized in that** the fault estimating device has:

   a device for estimating the rotational speed sensing fault which estimates the rotational speed sensing fault taking into account the rotational speed and/or the change in the rotational speed over time;
   a weighting device for weighting the estimated rotational speed sensing fault with the determined charging time; and
   a correction device for determining a correction in accordance with a possible change in the rotational speed between the sensing time and the start-of-charging time corresponding to the start-of-charging angle.

4. Ignition control device according to one of Claims 1 or 2, **characterized in that** the fault estimating device has:

   a temperature sensing device for sensing the temperature of the engine; and
   a characteristic curve device for specifying an estimated value for the offset with reference to the sensed temperature of the engine.

5. Ignition control method for controlling an ignition coil device for an internal combustion engine having the steps:

the rotational speed of the internal combustion engine is sensed at a sensing time within the ignition segment of a respective cylinder;
the predefined ignition angle corresponding to the sensed rotational speed, a predefined charging time corresponding to the sensed rotational speed and a corresponding start-of-charging angle are determined;
the start-of-charging angle and the charging time are output in a charging time output mode and the start-of-charging angle and the ignition angle are output in an ignition angle output mode to the ignition coil device;
a fault in the ignition angle in the charging time output mode and/or a fault in the charging time in the ignition angle output mode are/is estimated on the basis of a possible change in the rotational speed after the sensing time; and
an ignition control mode is determined from the ignition angle output and charging time output modes for the ignition segment on the basis of the estimated fault.

6. Method according to Claim 5, **characterized in that** the fault is estimated by means of an averaged change in rotational speed which is preferably weighted with the closing time.

7. Method according to Claim 5 or 6, **characterized in that** the start-of-charging time is estimated from the current angular speed.

8. Method according to Claim 5, 6 or 7, **characterized in that** a specific chronological trend in the rotational speed, preferably a constant acceleration, is assumed for the estimation.


**Revendications**

1. Dispositif de commande d'allumage pour commander un dispositif de bobine d'allumage d'un moteur à combustion interne, comportant :

- un dispositif d'acquisition de vitesse de rotation pour acquérir la vitesse de rotation du moteur à combustion interne en un instant d'acquisition à l'intérieur du cycle d'allumage d'un cylindre respectif ;
- un dispositif d'acquisition d'angle pour acquérir l'angle de vilebrequin actuel du moteur à combustion interne ;
- un dispositif de détermination pour déterminer un angle d'allumage prédéfini correspondant à la vitesse de rotation acquise, une durée de charge correspondant à la tension de batterie acquise et un angle de début de charge correspondant ;
- un dispositif de sortie de valeur de commande d'allumage pour sortir la durée de charge du dispositif de bobine d'allumage commençant à partir de l'angle de début de charge par l'ajout de la durée de charge en un mode de sortie de durée de charge et par le décomptage d'un angle de charge jusqu'à l'occurrence de l'allumage en un mode de sortie d'angle d'allumage ;
- un dispositif d'estimation d'erreur pour estimer une erreur de l'angle d'allumage dans le mode de sortie de durée de charge et/ou une erreur de la durée de charge dans le mode de sortie d'angle d'allumage en raison d'une possible modification de vitesse de rotation après l'instant d'acquisition ; et
- un dispositif de détermination de mode de commande d'allumage pour déterminer un mode de commande d'allumage à partir des modes sortie d'angle d'allumage et sortie de durée de charge pour le segment d'allumage reposant sur l'erreur estimée.

2. Dispositif de commande d'allumage selon la revendication 1,
   **caractérisé en ce que**
   le dispositif d'estimation d'erreur est constitué de manière telle qu'il estime un décalage de l'angle d'allumage en mode de sortie de durée de charge et que le dispositif de détermination de mode de commande d'allumage détermine le mode de sortie d'angle d'allumage lorsque le décalage estimé dépasse une valeur seuil prédéfinie.

3. Dispositif de commande d'allumage selon l'une des revendications 1 ou 2,
   **caractérisé en ce que**
   le dispositif d'estimation d'erreur présente :

- un dispositif d'estimation d'erreur d'acquisition de vitesse de rotation pour estimer l'erreur d'acquisition de vitesse de rotation en prenant en compte la vitesse de rotation et/ou la modification dans le temps de la vitesse de rotation ;
- un dispositif de pondération pour pondérer l'erreur estimée d'acquisition de vitesse de rotation avec la durée de charge déterminée ; et
- un dispositif de correction pour déterminer une correction correspondant à une modification possible de vitesse de rotation entre l'instant d'acquisition et l'instant de début de charge correspondant à l'angle de début de charge.

4. Dispositif de commande d'allumage selon l'une des revendications 1 ou 2,
   **caractérisé en ce que**

le dispositif d'estimation d'erreur comprend :

- un dispositif d'acquisition de température pour acquérir la température du moteur ; et
- un dispositif de lignes caractéristiques pour indiquer une valeur estimée du décalage à l'aide de la température de moteur acquise.

**5.** Procédé de commande d'allumage pour commander un dispositif de bobine d'allumage pour un moteur à combustion interne comprenant les étapes :

- acquisition de la vitesse de rotation d'un moteur à combustion interne en un instant d'acquisition à l'intérieur du segment d'allumage d'un cylindre respectif ;
- détermination d'un angle d'allumage prédéfini correspondant à la vitesse de rotation acquise, d'une durée de charge prédéfinie correspondant à la vitesse de rotation acquise et d'un angle de début de charge correspondant ;
- sortie vers le dispositif de bobine d'allumage de l'angle de début de charge et de la durée de charge en un mode de sortie de durée de charge et de l'angle de début de charge et de l'angle d'allumage en un mode de sortie d'angle d'allumage ;
- estimation d'une erreur de l'angle d'allumage dans le mode de sortie de durée d'allumage et/ou d'une erreur de la durée de charge dans le mode de sortie d'angle d'allumage en raison d'une possible modification de la vitesse de rotation après l'instant d'acquisition ; et
- détermination d'un mode de commande d'allumage des modes sortie d'angle d'allumage et sortie de durée de charge pour le segment d'allumage reposant sur l'erreur estimée.

**6.** Procédé selon la revendication 5, **caractérisé en ce que** l'erreur est estimée au moyen d'une modification moyenne de la vitesse de rotation qui, de préférence, est pondérée par le temps de fermeture.

**7.** Procédé selon la revendication 5 ou 6, **caractérisé en ce que** l'instant de début de charge est estimé à partir de la vitesse angulaire actuelle.

**8.** Procédé selon la revendication 5, 6 ou 7, **caractérisé en ce qu'** un certain déroulement dans le temps de la vitesse de rotation à estimer est admis, de préférence une accélération constante.

# FIG 1

```
        ┌──────────────┐
        │    START     │
        └──────┬───────┘
               │
               ▼
        ┌──────────────┐
        │    S 100     │
        └──────┬───────┘
               │
               ▼
        ┌──────────────┐
        │    S 200     │
        └──────┬───────┘
               │
               ▼
        ┌──────────────┐
        │    S 300     │
        └──────┬───────┘
               │
               ▼
        ┌──────────────┐
        │    S 400     │
        └──────┬───────┘
               │
               ▼
        ┌──────────────┐
        │    S 500     │
        └──────┬───────┘
               │
               ▼         S 600                    S 800
          ◇ZW Fehler >G◇──── N ──►┌──────────────┐
          ◇     ?      ◇          │     LZA      │
               │                  └──────────────┘
               J
               ▼
        ┌──────────────┐   S 700
        │     ZWA      │
        └──────────────┘
```

# FIG 2

ZZ

$t_{ZYK}$

$t_{SEG}$

② ① ③ ④ ②

°kW

0°　　180°　　360°　　540°　　720°

# FIG 3

$I_Z$

$t_{SEG}$

N,B

①

$t_L$

°kW

0°　　　　90°　　$W_{LB}$　$W_Z$　180°

C1

C2

KWS